# EUROPEAN PATENT APPLICATION

(11) **EP 4 831 826 A1**
(43) Date of publication of application: **28.10.2026**
(21) Application number: 24905657.3
(22) Date of filing: 04.09.2024
(51) Int. Cl.: G06F 16/242

(54) **COURIER COLLECTION AND DELIVERY STANDARD IDENTIFICATION METHOD AND APPARATUS, DEVICE, AND STORAGE MEDIUM**

(30) Priority: 19.12.2023 CN 202311761224
(71) Applicant: SF Technology Co., Ltd., Shenzhen, Guangdong 518000 (CN)
(72) Inventor: ZHANG, Kuan, Shenzhen, Guangdong 518000 (CN)
(74) Representative: Studio Torta S.p.A.
(86) International application number: PCT/CN2024/116827
(87) International publication number: WO 2025/130165

(57) **Abstract**

The present invention discloses a method and an apparatus for identifying a pickup and delivery standard for an express, a device, and a storage medium, which includes acquiring a name of a consignment to be queried; performing feature extraction on the name of the consignment to be queried to obtain an embedding vector of the name of the consignment to be queried, and performing query from a preset consignment delivery database according to the embedding vector and the name of the consignment to be queried to obtain a name of a target consignment and a customs code corresponding to the name of the target consignment; and querying a preset policy database for a policy document by using the customs code to obtain a target policy document, and organizing the target policy document to obtain a pickup and delivery standard for the consignment characterized by the name of the consignment to be queried. The method achieves the query of express related policies by using a name of an express consignment and can quickly obtain a pickup and delivery standard of an international express.

## Description

### TECHNICAL FIELD

The present invention relates to the technical field of natural language processing, and in particular to a method and an apparatus for identifying a pickup and delivery standard for an express, a device, and a storage medium.

### BACKGROUND

With the acceleration of globalization, more and more express companies have begun to try to expand business overseas. However, in the international market, they face the problem of difficulty in coping with different and changing a pickup and delivery standard for an express of various countries and regions. In the international market, entry regulations and customs inspection procedures of different countries and regions are different. For example, in the United States, items such as food and health products require the completion of FDA forms; in Australia, all incoming parcels need to pass Australian customs review; and in Europe, relevant regulations such as EU CE certification need to be followed. If express companies cannot accurately grasp these standards, additional costs such as delivery failure and return/ reshipment fees may be caused.

At present, in order to maintain and update these standards, the express companies need to establish a team dedicated to accepting and dispatching, organizing, interpreting and updating the latest express pickup and delivery policies of various countries and regions around the world. However, maintaining and updating the standards manually easily results in relatively low efficiency in identifying the pickup and delivery standard for the express.

### SUMMARY

In order to solve the above technical problems, embodiments of the present invention provide a method and system for identifying a pickup and delivery standard for an express, which achieves the query of express related policies by using a name of an express consignment and can quickly obtain a pickup and delivery standard of an international express.

In a first aspect of the embodiments of the present invention, a method for identifying a pickup and delivery standard of an express is provided. The method includes:
acquiring a name of a consignment to be queried;
performing feature extraction on the name of the consignment to be queried to obtain an embedding vector of the name of the consignment to be queried, and performing query from a preset consignment delivery database according to the embedding vector and the name of the consignment to be queried to obtain a name of a target consignment and a customs code corresponding to the name of the target consignment; and
querying a preset policy database for a policy document by using the customs code to obtain a target policy document, and organizing the target policy document to obtain a pickup and delivery standard for the consignment characterized by the name of the consignment to be queried.

In a possible implementation of the first aspect, the performing query from the preset consignment delivery database according to the embedding vector to obtain the name of the target consignment and the customs code corresponding to the name of the target consignment includes:
performing query from the preset consignment delivery database according to the embedding vector and the name of the consignment to be queried to obtain initial target consignment information, where the initial target consignment information includes a name of an initial target consignment and a customs code corresponding to the name of the initial target consignment; and
determining whether an attribute of the name of the initial target consignment is consistent with an attribute of the consignment to be queried, and if so, determining the name of the initial target consignment as the name of the target consignment, and the customs code corresponding to the name of the initial target consignment as the customs code corresponding to the name of the target consignment.

In a possible implementation of the first aspect, the performing query from the preset consignment delivery database according to the embedding vector and the name of the consignment to be queried to obtain initial target consignment information includes:
calculating an overlap degree between the name of the consignment to be queried and a name of each consignment in the preset consignment delivery database to obtain a plurality of overlap values;
determining a name of a consignment corresponding to an overlap value that reaches a preset value as a name of a first target consignment; and
determining whether the name of the first target consignment is consistent with the name of the consignment to be queried, and if so, determining information corresponding to the name of the first target consignment as the initial target consignment information; and if not, calculating similarity between the embedding vector of the name of the consignment to be queried and an embedding vector of a name of each consignment in the preset consignment delivery database to obtain a plurality of similarity values, and determining consignment information corresponding to a similarity value greater than a preset similarity value as the initial target consignment information.

In a possible implementation of the first aspect, before the acquiring the name of the consignment to be queried, the method further includes:
constructing a customs code interpretation database according to an import and export tariff policy text, where the customs code interpretation database includes customs codes and customs code interpretations;
acquiring a name and a customs code of a historical consignment, and querying the customs code interpretation database for the customs code interpretation according to the customs code of the historical consignment to obtain the customs code interpretation corresponding to the customs code of the historical consignment;
determining whether the name of the historical consignment is consistent with the customs code interpretation corresponding to the customs code of the historical consignment, and if so, extracting the name of the historical consignment from the customs code interpretation; and
constructing a preset consignment delivery database according to the name of the historical consignment.

In a possible implementation of the first aspect, the constructing the preset consignment delivery database according to the name of the historical consignment includes:
determining an embedding vector of the name of the historical consignment; and
constructing the preset consignment delivery database according to the name of the historical consignment, the customs code of the historical consignment, and the embedding vector of the name of the historical consignment.

In a possible implementation of the first aspect, before the acquiring the name of the consignment to be queried, the method further includes:
extracting an embedding vector of a name of goods or a description of goods from a policy and regulation document, and querying the preset consignment delivery database by using the embedding vector of the name of the goods or the description of the goods d to obtain multiple pieces of information of the consignment to be determined; and
performing attribute determination on each piece of information of the consignment to be determined and the name of the goods and the description of the goods; in case of attribute consistency, storing the information of the consignment to be determined and information of the policy and regulation document corresponding to the name of the goods into the preset policy database; and in case of attribute inconsistency, deleting the information of the consignment to be determined.

In a second aspect of the embodiments of the present invention, an apparatus for identifying a pickup and delivery standard for an express is provided. the apparatus includes:
an acquisition module, configured to acquire a name of a consignment to be queried;
a first query module, configured to perform feature extraction on the name of the consignment to be queried to obtain an embedding vector of the name of the consignment to be queried, and perform query from a preset consignment delivery database according to the embedding vector and the name of the consignment to be queried to obtain a name of a target consignment and a customs code corresponding to the name of the target consignment; and
a second query module, configured to query a preset policy database for a policy document by using the customs code to obtain a target policy document, and organize the target policy document to obtain a pickup and delivery standard for the consignment characterized by the name of the consignment to be queried.

In a possible implementation of the second aspect, the first query module includes an extraction unit and a determination unit,
where the extraction unit is configured to perform querying from the preset consignment delivery database according to the embedding vector and the name of the consignment to be queried to obtain initial target consignment information, where the initial target consignment information includes a name of an initial target consignment and a customs code corresponding to the name of the initial target consignment; and
the determination unit is configured to determine whether an attribute of the name of the initial target consignment is consistent with an attribute of the consignment to be queried, and if so, determine the name of the initial target consignment as the name of the target consignment, and the customs code corresponding to the name of the initial target consignment as the customs code corresponding to the name of the target consignment.

In a third aspect of the embodiments of the present invention, a computer device is provided, which includes:
a memory, configured to store a computer program; and
a processor, configured to implement, when executing the computer program, the method for identifying the pickup and delivery standard for the express in the first aspect.

In a fourth aspect of the embodiments of the present invention, a storage medium is provided, where a computer program is stored in the storage medium, where the computer program, when executed by a processor, implements the steps of the method for identifying the pickup and delivery standard for the express in the first aspect.

### BRIEF DESCRIPTION OF DRAWINGS

FIG. 1 is a flow chart of an embodiment of a method for identifying a pickup and delivery standard for an express provided by the present invention;
FIG. 2 is a flow chart of identification of a pickup and delivery standard for an express in an embodiment of a method for identifying a pickup and delivery standard for an express provided by the present invention;
FIG. 3 is a schematic structural diagram of a system in another embodiment of a method for identifying a pickup and delivery standard for an express provided by the present invention.

### DESCRIPTION OF EMBODIMENTS

The technical solutions in the embodiments of the present invention will be clearly and completely described below with reference to the drawings in the embodiments of the present invention. Apparently, the described embodiments are only some embodiments, not all of the embodiments of the present invention. Based on the embodiments of the present invention, all other embodiments obtained by those ordinary skilled in the art without contributing inventive efforts fall within the protection scope of the present invention.

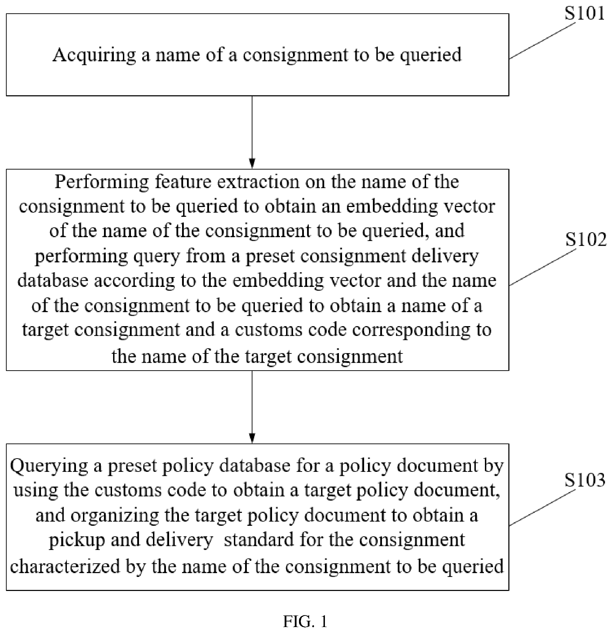

FIG. 1 is a flow chart of an embodiment of a method for identifying a pickup and delivery standard for an express provided by an embodiment of the present invention, which includes steps S101 to S103, each step is as follows:
S101: Acquiring a name of a consignment to be queried.

It should be noted that the name of the consignment to be queried is a name of a consignment that a user needs to query.

In the present embodiment, in this step, an operation of inputting the name of the consignment to be queried is required. The user inputs the name of the consignment to be queried through a query interface, and a backend receives the name of the consignment to be queried inputted by the user.

S102: Performing feature extraction on the name of the consignment to be queried to obtain an embedding vector of the name of the consignment to be queried, and performing query from a preset consignment delivery database according to the embedding vector and the name of the consignment to be queried to obtain a name of a target consignment and a customs code corresponding to the name of the target consignment.

In the present embodiment, in this step, an operation of querying the name of the consignment to be queried is required. A large language model technology is used to extract the embedding of the name of the consignment. Based on Chinese character matching and semantic matching of embeddings, a name of a similar consignment is queried from the query interface of the consignment delivery database, i.e., HS-INST-API. After a name of a similar consignment is queried, the large language model technology is continued to be used to determine whether an attribute of the name of the similar consignment is consistent with an attribute of the name of the inputted consignment. If so, a customs code corresponding to the name of the similar consignment is determined as the customs code corresponding to the consignment to be queried.

It should be noted that the large language model technology also refers to LLM technology, which is a model based on machine learning and natural language processing technologies. The embedding refers to an embedding vector, which is a multi-dimensional real-valued vector and refers to a process of mapping high-dimensional data into a low-dimensional space.

S103: Querying a preset policy database for a policy document by using the customs code to obtain a target policy document, and organizing the target policy document to obtain a pickup and delivery standard for the consignment characterized by the name of the consignment to be queried.

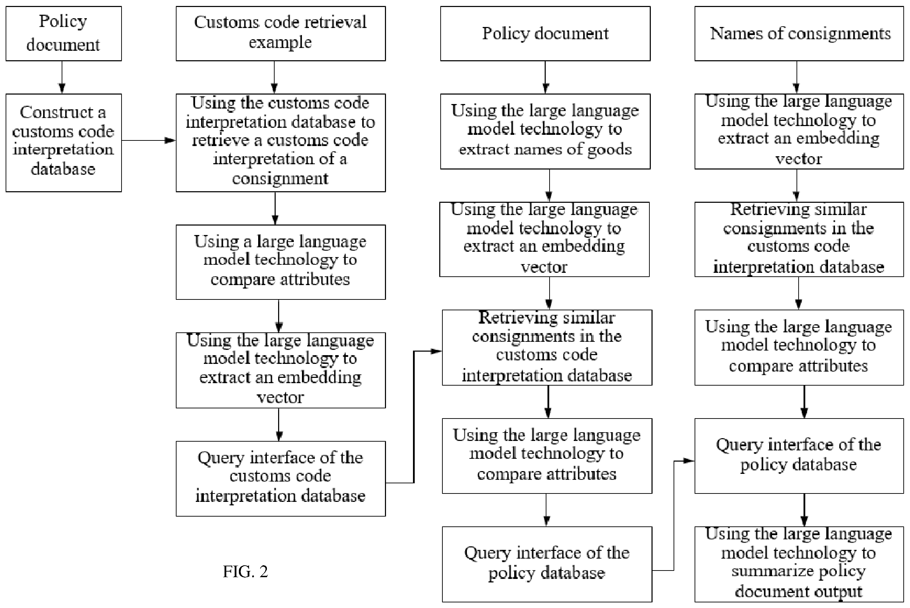

In the present embodiment, in this step, a query operation and a summarization operation are required. As shown in FIG. 2, after the customs code of a similar consignment is obtained, the customs code of the similar consignment is determined as the customs code of the consignment to be queried. The customs code is used to query the corresponding policy document from the preset policy database. Finally, the LLM technology is used to summarize and output the policy, thereby obtaining the pickup and delivery standard of the consignment to be queried.

By implementing the present embodiment, by acquiring the name of the consignment to be queried, feature extraction is performed on the name of the consignment to be queried to obtain an embedding vector of the name of the consignment to be queried; the preset consignment delivery database is queried according to the embedding vector and the name of the consignment to be queried to obtain a name of a target consignment and a customs code corresponding to the name of the target consignment; the preset policy database is queried for a policy document using the customs code to obtain a target policy document; and the target policy document is organized to obtain the pickup and delivery standard for the consignment characterized by the name of the consignment to be queried. The method achieves the query of express related policies by using the name of the express consignment and can quickly obtain the pickup and delivery standard for the international express.

In some embodiments, the method includes: performing query from the preset consignment delivery database according to the embedding vector and the name of the consignment to be queried to obtain initial target consignment information, where the initial target consignment information includes a name of an initial target consignment and a customs code corresponding to the name of the initial target consignment; and determining whether an attribute of the name of the initial target consignment is consistent with an attribute of the consignment to be queried, and if so, determining the name of the initial target consignment as the name of the target consignment, and the customs code corresponding to the name of the initial target consignment as the customs code corresponding to the name of the target consignment.

In the present embodiment, the name and the embedding vector of the consignment to be queried are used to query the name of the similar consignment from the consignment delivery database. Data fields in the consignment delivery database include < the name of the consignment, hscode, embedding>. There are two index fields in the database: one is the name of the consignment, and the other is the embedding, i.e., the embedding vector. The name of the consignment is used for character matching, and the embedding is used for vector matching.

After the names of the similar consignments are obtained, it is determined whether the attribute of the name of each similar consignment is consistent with the attribute of the name of the consignment to be queried. If so, the customs code corresponding to the name of the similar consignment is determined as the customs code of the consignment to be queried.

In some embodiments, the method includes: calculating an overlap degree between the name of the consignment to be queried and a name of each consignment in the preset consignment delivery database to obtain a plurality of overlap values; determining a name of a consignment corresponding to an overlap value that reaches a preset value as a name of a first target consignment; and determining whether the name of the first target consignment is consistent with the name of the consignment to be queried, and if so, determining information corresponding to the first target consignment name as the initial target consignment information; and if not, calculating similarity between the embedding vector of the name of the consignment to be queried and an embedding vector of a name of each consignment in the preset consignment delivery database to obtain a plurality of similarity values, and determining consignment information corresponding to a similarity value greater than a preset similarity value as the initial target consignment information.

In the present embodiment, Chinese character matching and the semantic matching of embeddings are used to query the name of the similar consignment from the query interface of the consignment delivery database, i.e., HS-INST-API. A specific process is as follows:
First, the character matching is used. The character matching refers to the number of matched characters. The user inputs the name of the consignment to be queried. The name of the consignment to be queried is traversed and compared with the name of the consignment in the consignment delivery database, and the overlap degree between them is calculated to determine a group that has a higher overlap degree. For example, if a name A of a consignment to be queried is "milk", and a name B of a similar consignment is "milk powder", then the overlap degree between A and B is 1/2, i.e., for two characters in A, one is found in B. For determination accuracy, a character matching threshold is set to 100%, i.e., B is considered compliant only when all characters in A are found in B.

However, when character matching is used, one-to-many situation may occur, i.e., a name of one consignment to be queried obtains names of multiple similar consignments. For example, if the name A of the consignment is "milk", "milk powder" and "milk" are queried. In this case, it is determined whether there exists a case where the name A of the consignment and a similar consignment B are exactly equal. If "milk" appears in B and they are exactly equal, "milk" takes priority. If "cow milk powder" and "milk of cow" are queried, and no "milk" appears in B, then embedding is required to be used for further determination.

When embedding determination is performed, the LLM technology is first used to extract embedding-A of the consignment to be queried. Then, the consignment delivery database is traversed, and cosine similarity comparison is performed with each embedding. A name of a consignment with the highest similarity is selected. For example, the similarity threshold is set to 0.9, and a name of a similar consignment with similarity greater than 0.9 is selected as the name of the target consignment of the consignment to be queried.

In some embodiments, before the acquiring a name of a consignment to be queried, the method further includes: constructing a customs code interpretation database according to an import and export tariff policy text, where the customs code interpretation database includes customs codes and customs code interpretations; acquiring a name and a customs code of a historical consignment, and querying the customs code interpretation database for the customs code interpretation according to the customs codes of the historical consignment to obtain the customs code interpretation corresponding to the customs codes of the historical consignment; determining whether the name of the historical consignment is consistent with the customs code interpretation corresponding to the customs code of the historical consignment, and if so, extracting the name of the historical consignment from the customs code interpretation; and constructing a preset consignment delivery database according to the name of the historical consignment.

In the present embodiment, it should be noted that the preset consignment delivery database refers to a database that includes information such as customs codes and names of consignments, and also refers to the consignment delivery database mentioned above. The import and export tariff policy text refers to policy documents related to import and export related information, including but not limited to laws and regulations, work reports, plans, and other documents.

The preset consignment delivery database is constructed by using information such as policy and regulation documents and customs codes. A specific construction method includes: acquiring relevant national policy documents, using the relevant national policy documents to construct a customs code interpretation database with fields including <hscode, hscode interpretation>, and constructing a query interface of an interpretation database for querying the customs codes, i.e., HS-LIB-API; acquiring historical delivery consignments and the customs codes of express companies, using a query interface of the customs code interpretation database to query interpretations corresponding to the customs codes, and using the LLM technology to determine whether the name of the consignment is consistent with the corresponding customs code interpretation; if so, using the LLM technology to extract the embedding vector of the name of the consignment, constructing a consignment delivery database based on customs codes <the name of the consignment, hscode, embedding>, and constructing a query interface of the consignment delivery database, i.e., HS-INST-API. It should be noted that the hscode refers to the customs code, and the embedding refers to the embedding vector.

In some embodiments, the method includes: determining an embedding vector of the name of the historical consignment; and constructing the preset consignment delivery database according to the name of the historical consignment, the customs code of the historical consignment, and the embedding vector of the name of the historical consignment.

In the present embodiment, the consignment delivery database based on customs codes is constructed according to the names of the historical consignments, the customs codes of the historical consignments, and the embedding vectors of the names of the historical consignments. Data in the consignment delivery database includes <the name of the consignment, hscode, embedding>, and a query interface of the consignment delivery database is constructed, i.e., HS-INST-API.

In some embodiments, the method includes: extracting an embedding vector of a name of goods or a description of goods from a policy and regulation document, and querying the preset consignment delivery database by using the embedding vector of the name of the goods or the description of the goods to obtain multiple pieces of information of the consignment to be determined; and performing attribute determination on each piece of information of the consignment to be determined and the name of the goods and the description of the goods; in case of attribute consistency, storing the information of the consignment to be determined and information of the policy and regulation document corresponding to the name of the goods into the preset policy database; and in case of attribute inconsistency, deleting the information of the consignment to be determined.

In the present embodiment, the policy and regulation documents are acquired, and key information such as country, goods, and import and export requirements is extracted therefrom. Then, the LLM technology is used to extract the names of the goods or embeddings of the descriptions of the goods in the policy and regulation documents, and the names of the similar consignments are queried from the query interface of the consignment delivery database by using Chinese character matching and semantic matching of embeddings. It is determined whether multiple names of queried similar consignments belong to the same attribute as the "goods names/descriptions". Since there may be a one-to-many relationship between the descriptions of the goods and the names of the consignments, the names of the similar consignments of different attributes are sequentially determined and removed, thereby obtaining the names of the similar consignment of the same attribute. For example, "equine animals and related products thereof" and "donkey meat" belong to the same attribute, and "equine animals and related products thereof" and "waistcoat" belong to different attributes. The names of the similar consignments and corresponding information such as corresponding customs codes, customs code interpretations, and policy information are stored into the policy database. Data in the policy database includes <customs code, code descriptions, goods names, goods descriptions, document titles, document content, document links, document release time>, and a policy database query interface, i.e., POLICY-LIB-API, is constructed.

It should be noted that the policy database can be updated according to domestic and foreign legal policy documents, thereby ensuring the timeliness of the preset policy database.

The method uses the LLM technology as a connecting hub among the consignments, policies and regulations, and the customs codes to extract and analyze the consignments to obtain effective policy documents, thereby effectively solving the pain point of difficulties in standard pickup in international express business and improving standard pickup efficiency and accuracy in the international express business.

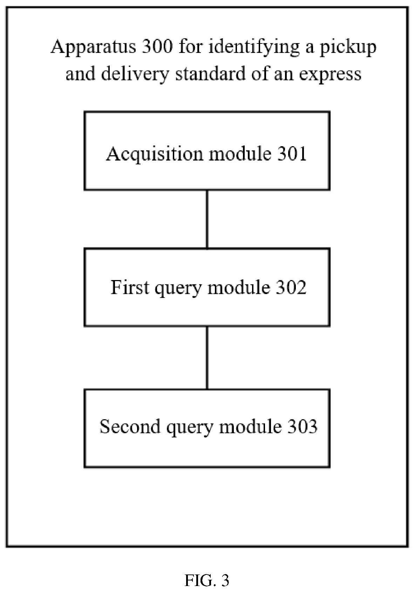

In some embodiments, as shown in FIG. 3, it shows a block diagram of an apparatus 300 for identifying a pickup and delivery standard for an express provided in an embodiment of the present application, which includes: an acquisition module 301, a first query module 302, and a second query module 303, where:
the acquisition module 301 is configured to acquire a name of a consignment to be queried;
the first query module 302 is configured to perform feature extraction on the name of the consignment to be queried to obtain an embedding vector of the name of the consignment to be queried, and perform query from a preset consignment delivery database according to the embedding vector and the name of the consignment to be queried to obtain a name of a target consignment and a customs code corresponding to the name of the target consignment; and
the second query module 303 is configured to query a preset policy database for a policy document by using the customs code to obtain a target policy document, and organize the target policy document to obtain a pickup and delivery standard for the consignment characterized by the name of the consignment to be queried.

In some embodiments, the first query module 302 includes an extraction unit and a determination unit,
where the extraction unit is configured to perform query from the preset consignment delivery database according to the embedding vector and the name of the consignment to be queried to obtain initial target consignment information, where the initial target consignment information includes a name of an initial target consignment and a customs code corresponding to the name of the initial target consignment; and
the determination unit is configured to determine whether an attribute of the name of the initial target consignment is consistent with an attribute of the consignment to be queried, and if so, determine the name of the initial target consignment as the name of the target consignment, and the customs code corresponding to the name of the initial target consignment as the customs code corresponding to the name of the target consignment. In some embodiments, the performing query from the preset consignment delivery database according to the embedding vector and the name of the consignment to be queried to obtain initial target consignment information includes:
   calculating an overlap degree between the name of the consignment to be queried and a name of each consignment in the preset consignment delivery database to obtain a plurality of overlap values;
   determining a name of a consignment corresponding to an overlap value that reaches a preset value as a name of a first target consignment; and
   determining whether the name of the first target consignment is consistent with the name of the consignment to be queried, and if so, determining information corresponding to the name of the first target consignment as the initial target consignment information; and if not, calculating similarity between the embedding vector of the name of the consignment to be queried and an embedding vector of a name of each consignment in the preset consignment delivery database to obtain a plurality of similarity values, and determining consignment information corresponding to a similarity value greater than a preset similarity value as the initial target consignment information.

In some embodiments, before the acquiring the name of a consignment to be queried, the method further includes:
constructing a customs code interpretation database according to an import and export tariff policy text, where the customs code interpretation database includes customs codes and customs code interpretations;
acquiring a name and a customs code of a historical consignment, and querying the customs code interpretation database for the customs code interpretation according to the customs code of the historical consignment to obtain the customs code interpretation corresponding to the customs code of the historical consignment;
determining whether the name of the historical consignment is consistent with the customs code interpretation corresponding to the customs code of the historical consignment, and if so, extracting the name of the historical consignment from the customs code interpretation; and
constructing a preset consignment delivery database according to the names of the historical consignment.

In some embodiments, the constructing the preset consignment delivery database according to the name of the historical consignment includes:
determining an embedding vector of the name of the historical consignment; and
constructing the preset consignment delivery database according to the name of the historical consignment, the customs code of the historical consignment, and the embedding vector of the name of the historical consignment.

In some embodiments, before the acquiring the name of the consignment to be queried, the method further includes:
extracting an embedding vector of a name of goods or a name of goods from a policy and regulation document, and querying the preset consignment delivery database by using the embedding vector of the name of the goods or the description of the goods to obtain multiple pieces of information of the consignment to be determined; and
performing attribute determination on each piece of information of the consignment to be determined and the name of the goods and the description of the goods; in case of attribute consistency, storing the information of the consignment to be determined and information of the policy and regulation document corresponding to the name of the goods into the preset policy database; and in case of attribute inconsistency, deleting the information of the consignment to be determined.

In an embodiment of the present application, a computer device is provided. The computer device includes a memory and a processor, where a computer program is stored in the memory, and the processor, when executing the computer program, implements the above steps. The implementation principle and the technical effect of the computer device provided in the present embodiment are similar to those of the above method embodiments, and will not be repeated here.

In an embodiment of the present application, a computer-readable storage medium is provided, where a computer program is stored in the storage medium, where the computer program, when executed by a processor, implements the above steps. The implementation principle and the technical effect of the computer-readable storage medium provided in the present embodiment are similar to those of the above method embodiments, and will not be repeated here.

Those ordinary skilled in the art can understand that all or part of the processes in the methods of the above embodiments can be implemented by instructing relevant hardware through a computer program. The computer program may be stored in a non-volatile computer-readable storage medium. When executed, the computer program may include the processes of the above method embodiments. Any reference to a memory, a storage, a database or other media used in the embodiments provided in the present application may include non-volatile and/or volatile memories. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. As illustration rather than limitations, the RAM is available in many forms such as a static RAM (SRAM), a dynamic RAM (DRAM), a synchronous DRAM (SDRAM), a double data rate SDRAM (DDRSDRAM), an enhanced SDRAM (ESDRAM), a Synchlink DRAM (SLDRAM), a Rambus direct RAM (RDRAM), a direct Rambus dynamic RAM (DRDRAM), and a Rambus dynamic RAM (RDRAM).

The technical features of the above embodiments may be combined arbitrarily. For the sake of concise description, not all possible combinations of the technical features in the above embodiments are described. However, as long as there is no contradiction in the combinations of these technical features, the combinations should be considered as within the scope of this description.

The specific embodiments described above further illustrate the purpose, technical solutions and beneficial effects of the present invention in detail. It should be understood that the above only describes specific embodiments of the present invention and is not intended to limit the protection scope of the present invention. In particular, it should be noted that for those skilled in the art, any modifications, equivalent substitutions, improvements, etc. made within the spirit and principle of the present invention shall be included in the protection scope of the present invention.

## Claims

1. A method for identifying a pickup and delivery standard for an express, comprising:
Acquiring a name of a consignment to be queried;
performing feature extraction on the name of the consignment to be queried to obtain an embedding vector of the name of the consignment to be queried, and performing query from a preset consignment delivery database according to the embedding vector and the name of the consignment to be queried to obtain a name of a target consignment and a customs code corresponding to the name of the target consignment; and
querying a preset policy database for a policy document by using the customs code to obtain a target policy document, and organizing the target policy document to obtain a pickup and delivery standard for the consignment **characterized by** the name of the consignment to be queried.

2. The method for identifying the pickup and delivery standard for the express according to claim 1, wherein the performing query from the preset consignment delivery database according to the embedding vector to obtain the name of the target consignment and the customs code corresponding to the name of the target consignment comprises:
performing query from the preset consignment delivery database according to the embedding vector and the name of the consignment to be queried to obtain initial target consignment information, wherein the initial target consignment information comprises a name of an initial target consignment and a customs code corresponding to the name of the initial target consignment; and
determining whether an attribute of the name of the initial target consignment is consistent with an attribute of the consignment to be queried, and if so, determining the name of the initial target consignment as the name of the target consignment, and the customs code corresponding to the name of the initial target consignment as the customs code corresponding to the name of the target consignment.

3. The method for identifying the pickup and delivery standard for the express according to claim 2, wherein the performing query from the preset consignment delivery database according to the embedding vector and the name of the consignment to be queried to obtain initial target consignment information comprises:
calculating an overlap degree between the name of the consignment to be queried and a name of each consignment in the preset consignment delivery database to obtain a plurality of overlap values;
determining a name of a consignment corresponding to an overlap value that reaches a preset value as a name of a first target consignment; and
determining whether the name of the first target consignment is consistent with the name of the consignment to be queried, and if so, determining information corresponding to the name of the first target consignment as the initial target consignment information; and if not, calculating similarity between the embedding vector of the name of the consignment to be queried and an embedding vector of a name of each consignment in the preset consignment delivery database to obtain a plurality of similarity values, and determining consignment information corresponding to a similarity value greater than a preset similarity value as the initial target consignment information.

4. The method for identifying the pickup and delivery standard for the express according to claim 1, wherein before the acquiring the name of the consignment to be queried, the method further comprises:
constructing a customs code interpretation database according to an import and export tariff policy text, wherein the customs code interpretation database comprises customs codes and customs code interpretations;
acquiring a name and a customs code of a historical consignment, and querying the customs code interpretation database for the customs code interpretation according to the customs code of the historical consignment to obtain the customs code interpretation corresponding to the customs code of the historical consignment;
determining whether the name of the historical consignment is consistent with the customs code interpretation corresponding to the customs code of the historical consignment, and if so, extracting the name of the historical consignment from the customs code interpretation; and
constructing a preset consignment delivery database according to the name of the historical consignment.

5. The method for identifying the pickup and delivery standard for the express according to claim 4, wherein the constructing the preset consignment delivery database according to the name of the historical consignment comprises:
determining an embedding vector of the name of the historical consignment; and
constructing the preset consignment delivery database according to the name of the historical consignment, the customs code of the historical consignment, and the embedding vector of the name of the historical consignment.

6. The method for identifying the pickup and delivery standard for the express according to claim 1, wherein before the acquiring the name of the consignment to be queried, the method further comprises:
extracting an embedding vector of a name of goods or a description of goods from a policy and regulation document, and querying the preset consignment delivery database by using the embedding vector of the name of the goods or the description of the goods to obtain multiple pieces of information of the consignment to be determined; and
performing attribute determination on each piece of information of the consignment to be determined and the name of the goods and the description of the goods; in case of attribute consistency, storing the information of the consignment to be determined and information of the policy and regulation document corresponding to the name of the goods into the preset policy database; and in case of attribute inconsistency, deleting the information of the consignment to be determined.

7. An apparatus for identifying a pickup and delivery standard for an express, comprising:
an acquisition module, configured to acquire a name of a consignment to be queried;
a first query module, configured to perform feature extraction on the name of the consignment to be queried to obtain an embedding vector of the name of the consignment to be queried, and perform query from a preset consignment delivery database according to the embedding vector and the name of the consignment to be queried to obtain a name of a target consignment and a customs code corresponding to the name of the target consignment; and
a second query module, configured to query a preset policy database for a policy document by using the customs code to obtain a target policy document, and organize the target policy document to obtain a pickup and delivery standard for the consignment **characterized by** the name of the consignment to be queried.

8. The apparatus for identifying the pickup and delivery standard for the express according to claim 7, wherein the first query module comprises an extraction unit and a determination unit,
wherein the extraction unit is configured to perform query from the preset consignment delivery database according to the embedding vector and the name of the consignment to be queried to obtain initial target consignment information, wherein the initial target consignment information comprises a name of an initial target consignment and a customs code corresponding to the name of the initial target consignment; and
the determination unit is configured to determine whether an attribute of the name of the initial target consignment is consistent with an attribute of the consignment to be queried, and if so, determine the name of the initial target consignment as the name of the target consignment, and the customs code corresponding to the name of the initial target consignment as the customs code corresponding to the name of the target consignment.

9. A computer device, comprising:
a memory, configured to store a computer program; and
a processor, configured to implement, when executing the computer program, the method for identifying the pickup and delivery standard for the express according to any one of claims 1 to 6.

10. A storage medium, wherein a computer program is stored in the storage medium, wherein the computer program, when executed by a processor, implements the steps of the method for identifying the pickup and delivery standard for the express according to any one of claims 1 to 6.
